# DEMANDE DE BREVET EUROPEEN

(11) **EP 4 753 105 A1**
(43) Date de publication de la demande: **03.06.2026**
(21) Numéro de dépôt: 25217495.8
(22) Date de dépôt: 20.11.2025
(51) Int. Cl.: H02J 7/50, H02J 1/10, H02J 7/60

(54) **CIRCUIT ELECTRIQUE DE PUISSANCE**

(30) Priorité: 28.11.2024 FR 2413163
(71) Demandeur: STMicroelectronics International N.V., 1228 Plan-les-Ouates, Geneva (CH)
(72) Inventeur: PROOT, Jean Pierre, 37540 SAINT CYR SUR LOIRE (FR); COLLEONI, Eric, 37100 TOURS (FR)
(74) Mandataire: Cabinet Beaumont

(57) **Abrégé**

La présente description concerne un circuit électrique de puissance (100), comprenant au moins :
- plusieurs sources d'alimentation électrique (102, 103) ;
- un bus d'interconnexion électrique (104) couplé aux sources d'alimentation électrique (102, 103) ;
- des dispositifs de commutation (114 - 120) comprenant chacun au moins un thyristor (124, 128, 132, 136) et un transistor à effet de champ (122, 126, 130, 134) couplés en parallèle l'un à l'autre, et configurés pour coupler les sources d'alimentation électrique (102, 103) en série ou en parallèle.

## Description

### Domaine technique

La présente description concerne de façon générale le domaine de l'électricité de puissance, et plus particulièrement celui des circuits électriques de puissance dans lesquels des sources d'alimentation électriques sont couplées à un bus d'interconnexion électrique.

### Technique antérieure

Dans un véhicule électrique tel qu'une voiture électrique, la ou les batteries du véhicule sont couplées à un bus d'interconnexion haute tension du véhicule par des contacteurs, ou relais, électromécaniques qui sont commandés par des circuits inducteurs comprenant des enroulements électromagnétiques. Ces contacteurs électromécaniques peuvent être remplacés par des commutateurs de puissance semiconducteurs, par exemple des MOSFETs (« Metal-Oxide-Semiconductor Field Effect Transistor » en anglais, ou transistor à effet de champ à grille métal-oxyde) à base de semi-conducteur à large bande, qui sont plus fiables et plus performants.

Toutefois, un contacteur électromagnétique présente une faible résistance à l'état passant (« ON resistance » en anglais), généralement inférieure ou égale à 1 mΩ. En considérant par exemple un courant égal à 700 A traversant un tel contacteur électromécanique dont la résistance à l'état passant est égale à 1 mΩ, la puissance dissipée par le contacteur est égale à 0,7 V * 700 A = 490 W. Pour obtenir des performances similaires avec un MOSFET de puissance réalisé en SiC (carbure de silicium) dont la résistance à l'état passant est plus élevée, par exemple égale à 7 mΩ, il est nécessaire de coupler en parallèle plusieurs transistors (sept dans l'exemple décrit) qui, de plus, nécessitent un refroidissement adéquat. Le coût d'une telle solution est trop important par rapport à celui d'un seul contacteur électromécanique. De plus, il existe un risque d'emballement thermique dû au coefficient de température positif des transistors (plus la température des transistors augmente, plus leur résistance augmente).

Un autre inconvénient des MOSFETs est que leurs pertes augmentent avec la température. Ainsi, dans l'exemple précédemment décrit, si sept transistors peuvent suffire pour une utilisation à 25°C, l'utilisation d'au moins huit transistors peut être nécessaire pour une utilisation à une température plus importante, par exemple égale à 150°C.

### Résumé de l'invention

Il existe un besoin de proposer un circuit électrique de puissance ne présentant pas au moins une partie des inconvénients des solutions existantes.

Un mode de réalisation pallie tout ou partie des inconvénients des solutions connues et propose un circuit électrique de puissance, comprenant au moins :
- plusieurs sources d'alimentation électrique ;
- un bus d'interconnexion électrique couplé aux sources d'alimentation électrique ;
- des dispositifs de commutation comprenant chacun au moins un thyristor et un transistor à effet de champ couplés en parallèle l'un à l'autre, et configurés pour coupler les sources d'alimentation électrique en série ou en parallèle.

Selon un mode de réalisation particulier, les sources d'alimentation électrique sont des batteries.

Selon un mode de réalisation particulier, les transistors à effet de champ des dispositifs de commutation sont des MOSFET.

Selon un mode de réalisation particulier, les transistors à effet de champ des dispositifs de commutation comportent du SiC.

Selon un mode de réalisation particulier, les transistors à effet de champ des dispositifs de commutation sont de type n.

Selon un mode de réalisation particulier, une première des sources d'alimentation électrique comporte une électrode positive couplée à un premier élément conducteur du bus d'interconnexion électrique, et une deuxième des sources d'alimentation électrique comporte une électrode négative couplée à un deuxième élément conducteur du bus d'interconnexion électrique.

Selon un mode de réalisation particulier, une électrode négative de la première source d'alimentation électrique est couplée à une électrode positive de la deuxième source d'alimentation électrique par des premier et deuxième dispositifs de commutation couplés en série l'un à l'autre et tels qu'ils forment ensemble un chemin de conduction bidirectionnel entre l'électrode négative de la première source d'alimentation électrique et l'électrode positive de la deuxième source d'alimentation électrique.

Selon un mode de réalisation particulier :
- les transistors à effet de champ des premier et deuxième dispositifs de commutation sont de type n ;
- les sources des transistors à effet de champ des premier et deuxième dispositifs de commutation sont couplées l'une à l'autre ;
- le drain du transistor à effet de champ du premier dispositif de commutation, l'anode du thyristor du premier dispositif de commutation et la cathode du thyristor du deuxième dispositif de commutation sont couplés à l'électrode négative de la première source d'alimentation électrique ;
- le drain du transistor à effet de champ du deuxième dispositif de commutation, l'anode du thyristor du deuxième dispositif de commutation et la cathode du thyristor du premier dispositif de commutation sont couplés à l'électrode positive de la deuxième source d'alimentation électrique.

Selon un mode de réalisation particulier, l'électrode négative de la première source d'alimentation électrique est couplée à l'électrode négative de la deuxième source d'alimentation électrique par un troisième dispositif de commutation, et l'électrode positive de la première source d'alimentation électrique est couplée à l'électrode positive de la deuxième source d'alimentation électrique par un quatrième dispositif de commutation.

Selon un mode de réalisation particulier, :
- les transistors à effet de champ des troisième et quatrième dispositifs de commutation sont de type n ;
- la source du transistor du troisième dispositif de commutation et la cathode du thyristor du troisième dispositif de commutation sont couplées à l'électrode négative de la deuxième source d'alimentation électrique ;
- le drain du transistor du troisième dispositif de commutation et l'anode du thyristor du troisième dispositif de commutation sont couplés à l'électrode négative de la première source d'alimentation électrique ;
- la source du transistor du quatrième dispositif de commutation et la cathode du thyristor du quatrième dispositif de commutation sont couplées à l'électrode positive de la deuxième source d'alimentation électrique ;
- le drain du transistor du quatrième dispositif de commutation et l'anode du thyristor du quatrième dispositif de commutation sont couplés à l'électrode positive de la première source d'alimentation électrique.

Selon un mode de réalisation particulier, le circuit électrique de puissance comprend en outre au moins un contacteur électromécanique par l'intermédiaire duquel les sources d'alimentation électrique sont couplées au bus d'interconnexion électrique.

Selon un mode de réalisation particulier, chacun des premier et deuxième éléments conducteurs du bus est couplé à l'une des électrodes d'une des sources d'alimentation électrique par un contacteur électromécanique.

Selon un mode de réalisation particulier, chacune de sources d'alimentation électrique est configurée pour présenter à ses bornes une tension électrique comprise entre 12 V et 1000 V.

Selon un mode de réalisation particulier, le circuit électrique de puissance comporte en outre un circuit de commande configuré pour commander les dispositifs de commutation tels que les sources d'alimentation électrique soient couplées en série ou en parallèle au bus d'interconnexion électrique selon un mode de fonctionnement du circuit électrique de puissance.

Il est également proposé un véhicule électrique comprenant au moins un circuit de puissance selon un mode de réalisation particulier.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
- la figure 1 représente un exemple de circuit électrique de puissance selon un mode de réalisation particulier ;
- la figure 2 représente des courants de conduction obtenus dans un dispositif de commutation d'un circuit électrique de puissance selon un mode de réalisation particulier, ainsi que dans un transistor à effet de champ seul, dans un thyristor seul, et dans plusieurs transistors à effet de champ couplés en parallèle ;
- la figure 3 représente des courants de conduction obtenus dans un transistor à effet de champ et dans un thyristor d'un dispositif de commutation d'un circuit électrique de puissance selon un mode de réalisation particulier ;
- la figure 4 représente un véhicule électrique comprenant un circuit électrique de puissance selon un mode de réalisation particulier.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques. Sur les figures, afin de faciliter leur lecture, les différents éléments ne sont pas représentés à la même échelle les uns par rapport aux autres.

Par souci de clarté, seuls les étapes et éléments utiles à la compréhension des modes de réalisation décrits ont été représentés et sont détaillés. En particulier, différents éléments (sources d'alimentation électriques, bus d'interconnexion électrique, dispositifs de commutation, contacteur électromécanique, véhicule électrique, etc.) ne sont pas détaillés. L'homme du métier sera à même de réaliser de manière détaillée ces éléments à partir de la description fonctionnelle donnée ici.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés (en anglais "coupled") entre eux, cela signifie que ces deux éléments peuvent être connectés ou être reliés par l'intermédiaire d'un ou plusieurs autres éléments. En outre, les termes « couplé », « relié » et « connecté » sont utilisés ici pour désigner des couplages, ou des liaisons, ou des connexions, électriques.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures. Toutefois, ces termes ne présument pas de la position et de l'orientation réelles du circuit lors de son utilisation.

De même, sans indication contraire, les gammes de valeurs indiquées incluent les bornes de ces gammes.

Sauf précision contraire, les expressions "environ", "approximativement", "sensiblement", et "de l'ordre de" signifient à 10 % près, de préférence à 5 % près.

Dans tous les modes de réalisation décrits, pour chaque transistor à effet de champ, les première et deuxième électrodes de conduction correspondent à deux électrodes différentes l'une de l'autre d'un même transistor, l'une d'elles correspondant à l'électrode de source et l'autre correspondant à l'électrode de drain.

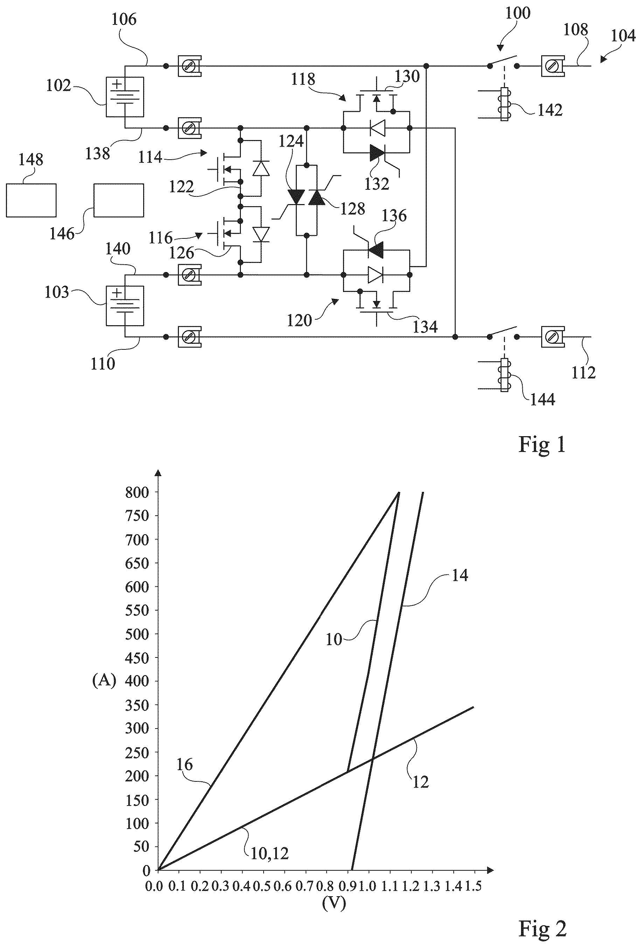

La figure 1 décrite ci-dessous représente un exemple de circuit électrique de puissance 100 selon un mode de réalisation particulier. Dans cet exemple, le circuit 100 correspond à un circuit d'alimentation électrique d'un véhicule électrique, par exemple une voiture électrique.

Le circuit 100 comporte plusieurs sources d'alimentation électrique qui, dans l'exemple décrit, sont destinées à alimenter électriquement le véhicule électrique. Sur l'exemple de la figure 1, le circuit 100 comporte deux sources d'alimentation électrique 102, 103 correspondant à deux batteries. Dans l'exemple décrit, ces sources d'alimentation électrique 102, 103 sont destinées à alimenter électriquement un véhicule électrique et délivrent chacune à ses bornes une tension électrique égale à environ 400 V, ou plus généralement comprise entre 12 V et 1000 V, ou entre 12 V et 560 V.

Le circuit 100 comporte également un bus d'interconnexion électrique 104 auquel les sources d'alimentation électrique 102, 103 sont couplées. Selon un exemple de réalisation particulier, une première des sources d'alimentation électrique 102 comporte une électrode positive 106 couplée à un premier élément conducteur 108 du bus 104, et une deuxième des sources d'alimentation électrique 103 comporte une électrode négative 110 couplée à un deuxième élément conducteur 112 du bus 104.

Dans l'exemple de réalisation décrit, le circuit 100 comporte également d'autres éléments ou composants électriques, électromécaniques ou électroniques couplés au bus 104, dont notamment un ou plusieurs moteurs électriques du véhicule dont fait partie le circuit 100, non représentés sur la figure 1.

Le circuit 100 comprend en outre des dispositifs de commutation comprenant chacun au moins un thyristor, ou SCR (« Silicon Controlled Rectifier » en anglais), et un transistor à effet de champ couplés en parallèle l'un à l'autre. Ces dispositifs de commutation sont configurés pour coupler les sources d'alimentation électrique 102, 103 en série ou en parallèle l'une de l'autre. Dans l'exemple de réalisation décrit, le circuit 100 comporte des premier et deuxième dispositifs de commutation 114, 116 configurés pour coupler en série les sources d'alimentation électrique 102, 103 (qui se retrouvent alors couplées en série entre les premier et deuxième éléments conducteurs 108, 112 du bus 104 de l'exemple décrit), et des troisième et quatrième dispositifs de commutation 118, 120 configurés pour coupler en parallèle les sources d'alimentation électrique 102, 103 (qui se retrouvent alors couplées en parallèle l'une de l'autre et avec une de leurs électrodes couplée au premier élément conducteur 108 du bus 104 et l'autre de leurs électrodes couplée au deuxième élément conducteur 112 du bus 104).

Dans l'exemple de réalisation décrit, le transistor à effet de champ de chacun des dispositifs de commutation 114 - 120 correspond à un MOSFET de puissance. En outre, dans l'exemple de réalisation décrit, ces transistors à effet de champ sont réalisés à partir d'au moins un semi-conducteur à large bande adapté à une conduction de forts courants électriques, par exemple du SiC. En outre, dans l'exemple de réalisation décrit, ces transistors à effet de champ sont de type n. Sur la figure 1, chacun des MOSFETs des dispositifs de commutation 114 - 120 est représenté avec sa diode intrinsèque (« body diode » en anglais).

Sur l'exemple de la figure 1, le premier dispositif de commutation 114 comporte un premier transistor à effet de champ 122 et un premier thyristor 124, le deuxième dispositif de commutation 116 comporte un deuxième transistor à effet de champ 126 et un deuxième thyristor 128, le troisième dispositif de commutation 118 comporte un troisième transistor à effet de champ 130 et un troisième thyristor 132, et le quatrième dispositif de commutation 120 comporte un quatrième transistor à effet de champ 134 et un quatrième thyristor 136.

Dans l'exemple de réalisation décrit, une électrode négative 138 de la première source d'alimentation électrique 102 est couplée à une électrode positive 140 de la deuxième source d'alimentation électrique 103 par les premier et deuxième dispositifs de commutation 114, 116 couplés en série l'un à l'autre et tels qu'ils forment ensemble un chemin de conduction bidirectionnel entre ces électrodes 138, 140 des sources 102, 103. Les premier et deuxième dispositifs de commutation 114, 116 permettent, lorsqu'ils sont à l'état passant, de réaliser un couplage série des sources d'alimentation électrique 102, 103 l'une à l'autre, entre les premier et deuxième éléments conducteurs 108, 112 du bus 104.

Sur l'exemple de la figure 1 :
- les sources des premier et deuxième transistors 122, 126 des premier et deuxième dispositifs de commutation 114, 116 sont couplées l'une à l'autre ;
- le drain du premier transistor 122 du premier dispositif de commutation 114, l'anode du premier thyristor 124 du premier dispositif de commutation 114 et la cathode du deuxième thyristor 128 du deuxième dispositif de commutation 116 sont couplés à l'électrode négative 138 de la première source d'alimentation électrique 102 ;
- le drain du deuxième transistor 126 du deuxième dispositif de commutation 116, l'anode du deuxième thyristor 128 du deuxième dispositif de commutation 116 et la cathode du premier thyristor 124 du premier dispositif de commutation 114 sont couplés à l'électrode positive 140 de la deuxième source d'alimentation électrique 103.

Dans l'exemple de réalisation décrit, l'électrode négative 138 de la première source d'alimentation électrique 102 est couplée l'électrode négative 110 de la deuxième source d'alimentation électrique 103, et également au deuxième élément conducteur 112 du bus 104, par le troisième dispositif de commutation 118. De plus, l'électrode positive 106 de la première source d'alimentation électrique 102 est couplée à l'électrode positive 140 de la deuxième source d'alimentation électrique 103, et également au premier élément conducteur 108 du bus 104, par le quatrième dispositif de commutation 120. Les troisième et quatrième dispositifs de commutation 118, 120 permettent, lorsqu'ils sont à l'état passant, de réaliser un couplage en parallèle des sources d'alimentation électrique 102, 103 l'une à l'autre, entre les premier et deuxième éléments conducteurs 108, 112 du bus 104.

Sur l'exemple de la figure 1 :
- la source du troisième transistor 130 et la cathode du troisième thyristor 132 du troisième dispositif de commutation 118 sont couplées à l'électrode négative 110 de la deuxième source d'alimentation électrique 103 ;
- le drain du troisième transistor 130 et l'anode du troisième thyristor 132 du troisième dispositif de commutation 118 sont couplés à l'électrode négative 138 de la première source d'alimentation électrique 102 ;
- la source du quatrième transistor 134 et la cathode du quatrième thyristor 136 du quatrième dispositif de commutation 120 sont couplées à l'électrode positive 140 de la deuxième source d'alimentation électrique 103 ;
- le drain du quatrième transistor 134 et l'anode du quatrième thyristor 136 du quatrième dispositif de commutation 120 sont couplés à l'électrode positive 106 de la première source d'alimentation électrique 102.

Dans l'exemple de réalisation décrit, le circuit 100 comprend en outre au moins un contacteur électromécanique par l'intermédiaire duquel les sources d'alimentation électrique 102, 103 sont couplées au bus 104. Plus particulièrement, dans l'exemple décrit, chacun des premier et deuxième éléments conducteurs 108, 112 du bus 104 est couplé à l'une des électrodes d'une des sources d'alimentation électrique 102, 103 par un contacteur électromécanique 142, 144. Sur l'exemple de la figure 1, un premier contacteur électromécanique 142 assure l'interruption ou non de la liaison électrique entre le premier élément conducteur 108 du bus 104 et l'électrode positive 106 de la premier source d'alimentation électrique 102, et le deuxième contacteur électromécanique 144 assure l'interruption ou non de la liaison électrique entre le deuxième élément conducteur 112 du bus 104 et l'électrode négative 110 de la deuxième source d'alimentation électrique 103. Plus généralement, le circuit 100 peut comporter au moins un contacteur, ou relais, électromécanique sur une liaison du circuit 100 où une isolation galvanique est susceptible d'être formée.

Dans l'exemple de réalisation décrit, le circuit 100 comporte en outre un circuit de commande 146 configuré pour commander les dispositifs de commutation 114 - 120, c'est-à-dire les transistors 122, 126, 130, 134 et les thyristors 124, 128, 132, 136, tels que les sources d'alimentation électrique 102, 103 soient couplées en série ou en parallèle au bus 102 selon un mode de fonctionnement du circuit 100. Plus particulièrement, les grilles des transistors 122, 126, 130, 134 et les gâchettes des thyristors 124, 128, 132, 136 sont couplées à des sorties du circuit de commande 146 sur lesquelles des signaux de commande sont délivrés (sur la figure 1, ces liaisons ne sont pas représentées). Une ou plusieurs sorties du circuit de commande 146 peuvent également être couplées à des entrées de commande des contacteurs électromécaniques 142, 144 afin de commander l'interruption de la liaison entre le bus 104 et les sources d'alimentation électrique 102, 103 lorsque cela est nécessaire.

Dans l'exemple de réalisation décrit, le circuit 100 comporte en outre un dispositif de refroidissement 148, représenté symboliquement sur la figure 1, configuré pour refroidir les dispositifs de commutation 114 - 120 du circuit 100. Par exemple, le dispositif 148 peut être configuré tel que la température de jonction de chaque thyristor 124, 128, 132, 136 ne dépasse pas environ 150°C. Le dispositif 148 peut par exemple être configuré pour faire circuler un liquide de refroidissement au voisinage des dispositifs de commutation 114 - 120.

A titre d'exemple, le tableau ci-dessous indique, pour différentes valeurs de la résistance thermique jonction - boîtier d'un thyristor d'un des dispositifs de commutation 114 - 120, notée RTH(j-c)thy, différentes valeurs caractéristiques obtenues dans le circuit 100 : le courant de conduction total obtenu dans le dispositif de commutation 114 - 120, le courant de conduction dans le thyristor, le courant de conduction dans le transistor du dispositif de commutation 114 - 120, la tension aux bornes du dispositif de commutation 114 - 120 (notée Vds car cette tension est égale à la tension Vds aux bornes des source et drain du transistor et à la tension aux bornes de l'anode et de la cathode du thyristor du dispositif de commutation), et la température de jonction du transistor du dispositif de commutation 114 - 120. Ces différentes valeurs sont obtenues pour une température de refroidissement de 60°C, pour un transistor MOSFET à base de SiC dont la résistance série est égale à 10,5 mΩ et pour un thyristor dont la surface est égale à 60 mm². Pour ces différentes valeurs de résistance thermique du thyristor, la résistance thermique jonction - boîtier du transistor du dispositif de commutation 114 - 120 est égale à 0,176°C/W, et la température de jonction du thyristor est égale à 150°C.

**[Table 1]**

| RTH(j-c) thy (°C/W) | Courant total (A) | Courant thy (A) | Courant trans (A) | Vds (V) | Tj trans (°C) |
|---|---|---|---|---|---|
| 0,29 | 350 | 247 | 103 | 1,252 | 82, 7 |
| 0,27 | 366 | 261 | 105 | 1,275 | 83,5 |
| 0,25 | 383 | 277 | 106 | 1,3 | 84,3 |
| 0,23 | 403 | 295 | 108 | 1,328 | 85,3 |
| 0,21 | 425 | 315 | 110 | 1,358 | 86, 4 |
| 0,19 | 452 | 339 | 113 | 1,395 | 87,7 |
| 0,17 | 484 | 368 | 116 | 1,437 | 89,2 |
| 0,15 | 522 | 403 | 119 | 1,485 | 91,1 |
| 0,13 | 570 | 447 | 127 | 1,544 | 93,3 |
| 0,11 | 632 | 506 | 127 | 1,618 | 96,3 |
| 0,09 | 716 | 583 | 133 | 1,715 | 100,1 |

La valeur du courant total qui traverse le dispositif de commutation 114 - 120 dépend du dispositif de refroidissement 148 et de la résistance thermique attendue pour les thyristors. Le tableau ci-dessus montre les valeurs calculées de la résistance thermique nécessaire pour des courants allant de 350 A à 716 A, avec un refroidissement égal à 60°C.

Dans l'exemple décrit, les sources d'alimentation électrique 102, 103 sont couplées en série l'une à l'autre et au bus 104 lorsque les premier et deuxième transistors 122, 126 et les premier et deuxième thyristors 124, 128 sont à l'état passant. De plus, les sources d'alimentation électrique 102, 103 sont couplées en parallèle l'une de l'autre et au bus 104 lorsque les troisième et quatrième transistors 130, 134 et les troisième et quatrième thyristors 132, 136 sont à l'état passant. Dans l'exemple décrit, les premier et deuxième dispositifs de commutation 114, 116 forment ensemble un circuit de commutation bidirectionnel, c'est-à-dire apte à conduire un courant dans deux directions opposées, et les troisième et quatrième dispositifs de commutation 118, 120 forment chacun un circuit de commutation unidirectionnel, c'est-à-dire apte à conduire un courant dans une seule direction.

Le caractère bidirectionnel du circuit de commutation formé par les dispositifs de commutation 114, 116 permet par exemple la conduction d'un courant positif lorsqu'un ou plusieurs moteurs alimentés par les sources d'alimentation électrique 102, 103, qui correspondent par exemple à des packs de batteries, entraînent le véhicule, et la conduction d'un courant négatif de charge (vis-à-vis de la polarisation des sources d'alimentation électrique 102, 103), par exemple obtenu lorsque le véhicule freine ou lors d'une recharge à une borne de recharge fournissant une tension par exemple égale à la somme des tensions aux bornes des sources d'alimentation électrique 102, 103, est transmis aux sources d'alimentation électrique 102, 103. En outre, les sources d'alimentation électrique 102, 103 peuvent être couplées en parallèle l'une de l'autre lors d'une recharge des sources d'alimentation électrique 102, 103 à une borne de recharge fournissant une tension par exemple égale à la tension aux bornes de l'une des sources d'alimentation électrique 102, 103.

En variante, les troisième et quatrième dispositifs de commutation 118, 120 peuvent servir à coupler uniquement l'une ou l'autre des sources d'alimentation électrique 102, 103 au bus 104. Par exemple, il est possible que seule la première source d'alimentation électrique 102 soit couplée au bus 104 en configurant les premier, deuxième et quatrième transistors 122, 126, 134 et thyristors 124, 128, 136 des dispositifs de commutation 114, 116, 120 à l'état bloqué et en configurant le troisième transistor 130 et le troisième thyristor 132 du troisième dispositif de commutation 118 à l'état passant. De même, il est possible que seule la deuxième source d'alimentation électrique 103 soit couplée au bus 104 en configurant les premier, deuxième et troisième transistors 122, 126, 130 et thyristors 124, 128, 132 des dispositifs de commutation 114, 116, 118 à l'état bloqué et en configurant le quatrième transistor 134 et le quatrième thyristor 136 du quatrième dispositif de commutation 120 à l'état passant. Une telle configuration peut correspondre par exemple, lorsque les sources d'alimentation électrique 102, 103 correspondent à des packs de batteries, à une charge de l'une des sources d'alimentation électrique 102, 103, puis une charge de l'autre des sources d'alimentation électrique 102, 103, sachant toutefois qu'il est souhaitable de conserver un même niveau de charge des packs de batteries.

Ainsi, il est décrit, au sein du circuit 100, l'utilisation de dispositifs de commutation comprenant chacun un transistor à effet de champ de puissance, par exemple un MOSFET à base de SiC, et un thyristor couplé en parallèle l'un de l'autre. Dans un tel dispositif de commutation, le transistor seul permet de conduire le courant jusqu'à une première valeur, par exemple égale à environ 200 A. Au-delà de cette première valeur, le courant est conduit de manière partagée par le transistor et par le thyristor. Par exemple, pour un courant total égale à 700 A à conduire par le dispositif de commutation, une première partie de ce courant, par exemple égale à 250 A, peut être conduite par le MOSFET de puissance, et une deuxième partie de ce courant, par exemple égale à 450A, peut être conduite par le thyristor.

La courbe 10 de la figure 2 représente la valeur du courant conduit par un tel dispositif de commutation, en fonction de la valeur de la tension à ses bornes. A titre de comparaison, la courbe 12 représente la valeur du courant conduit par un MOSFET de puissance à base de SiC similaire à celui du dispositif de commutation, et la courbe 14 représente la valeur du courant conduit par un thyristor similaire à celui du dispositif de commutation. Dans cet exemple, lorsque la tension aux bornes du dispositif de commutation est inférieure à la tension à partir de laquelle le thyristor devient passant, par exemple égale à environ 0,9 V, la conduction du courant est assurée par le MOSFET de puissance seul. Au-delà de cette valeur de tension, le thyristor du dispositif de commutation devient passant et sa conduction s'ajoute à celle du MOSFET du puissance. Le thyristor a une capacité de conduction plus importante que celle du transistor. La courbe 16 de la figure 2 représente la valeur du courant conduit par huit MOSFETs de puissance similaires à celui du dispositif de commutation et couplés en parallèle les uns des autres. Avec une tension légèrement supérieure à 1 V à ses bornes, le dispositif de commutation permet de conduire un courant égal à 800 A, soit autant que les huit MOSFETS couplés en parallèle. Les différentes courbes représentées sur la figure 2 sont obtenues à une température de fonctionnement égale à 25 °C.

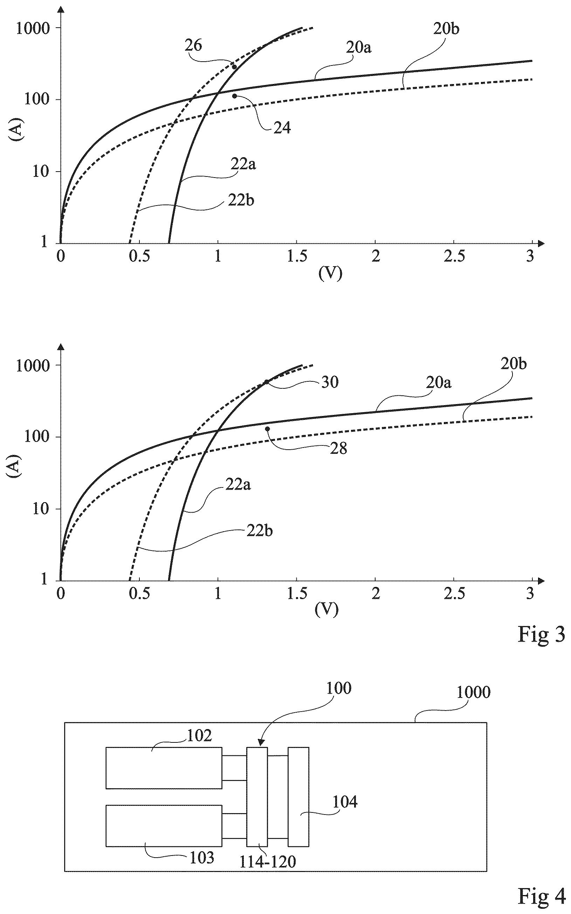

Sur la figure 3, la courbe 20a représente la valeur du courant du conduction obtenu, à une température de 25°C, dans un transistor MOSFET à base de SiC d'un des dispositifs de commutation 114 - 120 et présentant une résistance à l'état passant égale à 8,5 mΩ, en fonction de la tension à ses bornes. La courbe 20b représente la valeur de ce courant lors d'un fonctionnement à chaud de ce transistor. La courbe 22a représente la valeur du courant de conduction obtenu, à une température de 25°C, dans un thyristor d'un des dispositifs de commutation 114 - 120 et dont la surface active est égale à 120 mm². La courbe 22b représente la valeur de ce courant lors d'un fonctionnement à chaud de ce thyristor.

Le point de fonctionnement désigné par la référence 24 correspond à la caractéristique de conduction du transistor obtenue lorsque la tension aux bornes de la source et du drain du transistor est égale à 1,111 V. A ce point de fonctionnement, le courant de conduction du transistor est égal à 113,1 A, la puissance dissipée par le transistor est égale à 125,6 W, et la température de jonction du transistor est égale à 82,1°C. Le point de fonctionnement désigné par la référence 26 correspond à la caractéristique de conduction du thyristor obtenue lorsque la tension aux bornes de l'anode et de la cathode du thyristor est égale à 1,111 V. A ce point de fonctionnement, le courant de conduction du thyristor est égal à 286,9 A (le courant de conduction total du dispositif de commutation est donc égal à 400 A), la puissance dissipée par le thyristor est égale à 318,7 W (la puissance totale dissipée par le dispositif de commutation est donc égale à 444,4 W) et la température de jonction du thyristor égale à 95,1°C.

Le point de fonctionnement désigné par la référence 28 correspond à la caractéristique de conduction du transistor obtenue lorsque la tension aux bornes de la source et du drain du transistor est égale à 1,317 V. A ce point de fonctionnement, le courant de conduction du transistor est égal à 130,6 A, la puissance dissipée par le transistor est égale à 171,9 W, et la température de jonction du transistor est égale à 90,3°C. Le point de fonctionnement désigné par la référence 30 correspond à la caractéristique de conduction du thyristor obtenue lorsque la tension aux bornes de l'anode et de la cathode du thyristor est égale à 1,317 V. A ce point de fonctionnement, le courant de conduction du thyristor est égal à 569,4 A (le courant de conduction total du dispositif de commutation est donc égal à 700 A), la puissance dissipée par le thyristor est égale à 750 W (la puissance totale dissipée par le dispositif de commutation est donc égale à 921,9 W) et la température de jonction du thyristor égale à 142,5°C.

Dans chaque dispositif de commutation 114 - 120, le transistor peut conduire seul le courant de conduction jusqu'à ce que le thyristor devienne passant. La valeur du courant conduit par le transistor peut dépendre notamment de la valeur de sa résistance à l'état passant (Ron).

Chaque dispositif de commutation 114 - 120 permet d'obtenir des performances de conduction et de dissipation thermique similaires à celles de plusieurs MOSFETs de puissance couplés en parallèle, pour un coût moindre et un plus faible encombrement. De plus, le coût de tels dispositifs de commutation est compétitif vis-à-vis de celui de contacteurs électromécaniques.

De tels dispositifs de commutation 114 - 120 ont pour avantage de présenter de faibles pertes. En effet, dans chacun des dispositifs de commutation 114 - 120, la résistance à l'état passant du transistor à effet de champ est par exemple inférieure à 10 mΩ, et celle du thyristor est par exemple inférieure à 2 mΩ.

Dans un tel dispositif de commutation 114 - 120, le thyristor permet de mieux supporter un éventuel courant de surcharge circulant dans le circuit, comparativement à plusieurs MOSFETs couplés en parallèle les uns aux autres.

En outre, avec de tels dispositifs de commutation 114 - 120, la répartition du courant de conduction entre le transistor et le thyristor n'est pas problématique, contrairement à un dispositif de commutation comprenant plusieurs transistors couplés parallèlement les uns aux autre dans lequel les différences de fabrication entre les transistors peuvent conduire à une répartition du courant non homogène entre les transistors.

En outre, dans de tels dispositifs de commutation 114 - 120, une compensation en température se produit naturellement étant donné le coefficient de température négatif du thyristor, qui compense le comportement thermique du transistor dont le coefficient de température est positif, et évite ainsi une situation d'emballement thermique au sein du dispositif de commutation.

Chaque dispositif de commutation 114 - 120 permet d'avoir une bonne dissipation de la puissance, et ne nécessite pas de coupure à de forts niveaux de courant.

Par exemple, le circuit 100 peut faire partie d'un véhicule électrique 1000 tel que représenté schématiquement sur la figure 4. Dans cet exemple, les sources d'alimentation électrique 102, 103 correspondent aux batteries du véhicule 1000, et le bus d'interconnexion électrique 104 permet de connecter ces batteries au(x) moteur(s) du véhicule 1000.

Le circuit 100 peut correspondre à un circuit de puissance à courant continu (DC) ou alternatif (AC), suivant la nature des tensions délivrées par les sources d'alimentation électrique 102, 103. En variante de l'exemple de circuit 100 précédemment décrit, les batteries pourraient être remplacées par d'autres types de sources d'alimentation électrique, par exemple fournissant un courant et une tension alternative. Lorsque le circuit 100 correspond à un circuit de puissance AC, le circuit 100 peut ne pas comporter les relais électromécaniques 142, 144 du fait qu'il est, dans cette configuration, aisé de bloquer les thyristors des dispositifs de commutation 114 - 120.

Dans les exemples précédemment décrits, les transistors à effet de champ des dispositifs de commutation 114 - 120 sont de type n. En variante, ces transistors à effet de champ peuvent être de type p. Dans ce cas, les connexions des électrodes de conduction des transistors à effet de champ sont inversées par rapport aux exemples décrits (connexion de la source à la place du drain, et inversement). Les valeurs des signaux de commande appliqués sur les grilles de tels transistors sont également adaptées au type de conductivité des transistors.

Le circuit électrique de puissance est par exemple destiné à l'industrie automobile. L'électrification des véhicules automobiles génère un niveau de contenu électronique de plus en plus élevé dans les véhicules. Le dispositif comprend par exemple des thyristors, des redresseurs, des diodes de suppression des tensions transitoires à haute tension, des modules, etc. destinés à être incorporés dans lesdits véhicules. L'automatisation de la conduite génère également un contenu électronique de plus en plus important dans les véhicules. Le dispositif comprend par exemple des diodes de suppression des tensions transitoires à haute tension, une protection contre les décharges électromagnétiques et des filtres de mode commun pour protéger contre les risques électriques dans l'électronique complexe émergente.

Le circuit électrique de puissance est par exemple destiné à l'industrie automobile, appliqué à la reconfiguration de batteries en fonction de caractéristiques de la borne de charge à laquelle le circuit est couplé.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus.

## Revendications

1. Circuit électrique de puissance (100), comprenant au moins :
- plusieurs sources d'alimentation électrique (102, 103) ;
- un bus d'interconnexion électrique (104) couplé aux sources d'alimentation électrique (102, 103) ;
- des dispositifs de commutation (114 - 120) comprenant chacun au moins un thyristor (124, 128, 132, 136) et un transistor à effet de champ (122, 126, 130, 134) couplés en parallèle l'un à l'autre, et configurés pour coupler les sources d'alimentation électrique (102, 103) en série ou en parallèle.

2. Circuit électrique de puissance (100) selon la revendication 1, dans lequel les sources d'alimentation électrique (102, 103) sont des batteries.

3. Circuit électrique de puissance (100) selon l'une quelconque des revendications précédentes, dans lequel les transistors à effet de champ (122, 126, 130, 134) des dispositifs de commutation (114 - 120) sont des MOSFET.

4. Circuit électrique de puissance (100) selon l'une quelconque des revendications précédentes, dans lequel les transistors à effet de champ (122, 126, 130, 134) des dispositifs de commutation (114 - 120) comportent du SiC.

5. Circuit électrique de puissance (100) selon l'une quelconque des revendications précédentes, dans lequel les transistors à effet de champ (122, 126, 130, 134) des dispositifs de commutation (114 - 120) sont de type n.

6. Circuit électrique de puissance (100) selon l'une quelconque des revendications précédentes, dans lequel une première des sources d'alimentation électrique (102) comporte une électrode positive (106) couplée à un premier élément conducteur (108) du bus d'interconnexion électrique (104), et dans lequel une deuxième des sources d'alimentation électrique (103) comporte une électrode négative (110) couplée à un deuxième élément conducteur (112) du bus d'interconnexion électrique (104).

7. Circuit électrique de puissance (100) selon la revendication 6, dans lequel une électrode négative (138) de la première source d'alimentation électrique (102) est couplée à une électrode positive (140) de la deuxième source d'alimentation électrique (103) par des premier et deuxième dispositifs de commutation (114, 116) couplés en série l'un à l'autre et tels qu'ils forment ensemble un chemin de conduction bidirectionnel entre l'électrode négative (138) de la première source d'alimentation électrique (102) et l'électrode positive (140) de la deuxième source d'alimentation électrique (103).

8. Circuit électrique de puissance (100) selon la revendication 7, dans lequel :
- les transistors à effet de champ (122, 126) des premier et deuxième dispositifs de commutation (114, 116) sont de type n ;
- les sources des transistors à effet de champ (122, 126) des premier et deuxième dispositifs de commutation (114, 116) sont couplées l'une à l'autre ;
- le drain du transistor à effet de champ (122) du premier dispositif de commutation (114), l'anode du thyristor (124) du premier dispositif de commutation (114) et la cathode du thyristor (128) du deuxième dispositif de commutation (116) sont couplés à l'électrode négative (138) de la première source d'alimentation électrique (102) ;
- le drain du transistor à effet de champ (126) du deuxième dispositif de commutation (116), l'anode du thyristor (128) du deuxième dispositif de commutation (116) et la cathode du thyristor (124) du premier dispositif de commutation (114) sont couplés à l'électrode positive (140) de la deuxième source d'alimentation électrique (103).

9. Circuit électrique de puissance (100) selon l'une quelconque des revendications 6 à 8, dans lequel l'électrode négative (138) de la première source d'alimentation électrique (102) est couplée à l'électrode négative (110) de la deuxième source d'alimentation électrique (103) par un troisième dispositif de commutation (118), et dans lequel l'électrode positive (106) de la première source d'alimentation électrique (102) est couplée à l'électrode positive (140) de la deuxième source d'alimentation électrique (103) par un quatrième dispositif de commutation (120).

10. Circuit électrique de puissance (100) selon la revendication 9, dans lequel :
- les transistors à effet de champ (130, 134) des troisième et quatrième dispositifs de commutation (118, 120) sont de type n ;
- la source du transistor (130) du troisième dispositif de commutation (118) et la cathode du thyristor (132) du troisième dispositif de commutation (118) sont couplées à l'électrode négative (110) de la deuxième source d'alimentation électrique (103) ;
- le drain du transistor (130) du troisième dispositif de commutation (118) et l'anode du thyristor (132) du troisième dispositif de commutation (118) sont couplés à l'électrode négative (138) de la première source d'alimentation électrique (102) ;
- la source du transistor (134) du quatrième dispositif de commutation (120) et la cathode du thyristor (136) du quatrième dispositif de commutation (120) sont couplées à l'électrode positive (140) de la deuxième source d'alimentation électrique (103) ;
- le drain du transistor (134) du quatrième dispositif de commutation (120) et l'anode du thyristor (136) du quatrième dispositif de commutation (120) sont couplés à l'électrode positive (106) de la première source d'alimentation électrique (102).

11. Circuit électrique de puissance (100) selon l'une quelconque des revendications précédentes, comprenant en outre au moins un contacteur électromécanique (142, 144) par l'intermédiaire duquel les sources d'alimentation électrique (102, 103) sont couplées au bus d'interconnexion électrique (104).

12. Circuit électrique de puissance selon les revendications 6 et 11, dans lequel chacun des premier et deuxième éléments conducteurs (108, 112) du bus (104) est couplé à l'une des électrodes (106, 110) d'une des sources d'alimentation électrique (102, 103) par un contacteur électromécanique (142, 144).

13. Circuit électrique de puissance (100) selon l'une quelconque des revendications précédentes, dans lequel chacune de sources d'alimentation électrique (102, 103) est configurée pour présenter à ses bornes une tension électrique comprise entre 12 V et 1000 V.

14. Circuit électrique de puissance (100) selon l'une quelconque des revendications précédentes, comportant en outre un circuit de commande (146) configuré pour commander les dispositifs de commutation (114 - 120) tels que les sources d'alimentation électrique (102, 103) soient couplées en série ou en parallèle au bus d'interconnexion électrique (104) selon un mode de fonctionnement du circuit électrique de puissance (100).

15. Véhicule électrique (1000) comprenant au moins un circuit de puissance (100) selon l'une quelconque des revendications précédentes.
